# EUROPEAN PATENT SPECIFICATION

(11) **EP 3 276 014 B1**
(45) Date of publication and mention of the grant of the patent: **29.04.2020**
(21) Application number: 16768593.2
(22) Date of filing: 16.03.2016
(51) Int. Cl.: C22B 23/00, B22F 9/26, C22B 3/08, C22B 3/26

(54) **COBALT POWDER PRODUCTION METHOD**
KOBALTPULVERHERSTELLUNGSVERFAHREN
PROCÉDÉ DE PRODUCTION DE POUDRE DE COBALT

(30) Priority: 23.03.2015 JP 2015059760
(43) Date of publication of application: 31.01.2018
(73) Proprietor: Sumitomo Metal Mining Co., Ltd., Tokyo 105-8716 (JP)
(72) Inventor: HEGURI Shin-ichi, Niihama-shi Ehime 792-0002 (JP); OZAKI Yoshitomo, Niihama-shi Ehime 792-0002 (JP); TAKAISHI Kazuyuki, Niihama-shi Ehime 792-0002 (JP); DOI Yasuo, Niihama-shi Ehime 792-0002 (JP); IKEDA Osamu, Niihama-shi Ehime 792-0002 (JP); YAMAGUMA Ryoma, Niihama-shi Ehime 792-0002 (JP); KUDO Yohei, Niihama-shi Ehime 792-0002 (JP)
(74) Representative: Barker Brettell LLP
(86) International application number: PCT/JP2016/058384
(87) International publication number: WO 2016/152690

(56) References cited:
- JP-A- H02 503 575
- JP-A- 2012 012 619
- US-A- 2 749 235
- US-A1- 2003 223 928
- W KUNDA ET AL: "THE REDUCTION OF COBALT FROM ITS AQUEOUS AMMINE AMMO- NIUM SULPHATE SYSTEM USING HYDROGEN UNDER PRESSURE", HYDROMETALLURGY, vol. 4, no. 4, 1 January 1979 (1979-01-01) , pages 347-375, XP055380158,

## Description

### Technical Field

The present invention relates to a method for obtaining high purity cobalt powder from a cobalt ammine sulfate complex solution.

### Background Art

A method for industrially producing cobalt powder using a hydrometallurgical process includes a method for producing cobalt powder by dissolving a raw material in a sulfuric acid solution followed by removing impurities to obtain a cobalt sulfate solution, adding ammonia to the resulting cobalt sulfate solution to form an ammine complex of cobalt, and feeding hydrogen gas into the produced cobalt ammine sulfate complex solution to reduce cobalt.

For example, Patent Literature 1 describes a process for producing cobalt powder by adding silver as seed crystals during the reduction reaction to precipitate cobalt on the seed crystals.

Specifically, the process is a method of producing cobalt powder from an ammoniacal cobalt sulfate solution, including: adding silver sulfate or silver nitrate to the solution in an amount such that the proportion of soluble silver to cobalt is about 0.3 g to 10 g of silver per kg of cobalt to be reduced, adding an organic dispersant in an amount effective for preventing the aggregation of cobalt metal powder to be produced, and heating the resulting solution at a temperature in a range of 150 to 250°C with stirring at a hydrogen pressure of 2500 to 5000 KPa for a time sufficient to reduce cobalt sulfate to cobalt metal powder.

However, the method has had a problem that affects product quality because the incorporation of silver derived from seed crystals into the product cannot be avoided.

There is also a method of obtaining cobalt powder using a reducing agent other than hydrogen gas.

For example, Patent Literature 2 discloses cobalt powder suitable as conductive particles for conductive paste and multilayer capacitors, and a method for producing the same. The method provides a method for producing metal powder by a liquid phase reduction method that is improved so that a particle aggregate may be hardly produced. Specifically, the method for producing metal powder includes a first step of dissolving a metal compound, a reducing agent, a complexing agent, and a dispersant to prepare an aqueous solution containing metal ions derived from the metal compound and a second step of adjusting the pH of the aqueous solution to reduce the metal ions with the reducing agent to precipitate the metal powder.

However, this production method requires high cost since a large amount of expensive chemicals is used, and has had economically disadvantageous problem for applying the method to the industrial cobalt smelting process as described above.

Further, Patent Literature 3 discloses a method for recovering nickel and cobalt using ammonia.

This method is a method for the recovery of nickel and cobalt from nickel and cobalt-containing laterite ores, including: a) roasting feed ore in a reducing atmosphere in a rotary kiln to selectively reduce the nickel and cobalt, wherein either no, or less than 2.5% by weight of reducing agent is added to the feed ore prior to roasting; b) leaching the reduced ore with an aerated solution of ammoniacal ammonium carbonate to extract the nickel and cobalt into a leach solution; and c) separating the ore tailings from the leach solution and recovering the nickel and cobalt by a process selected from ammoniacal solvent extraction, precipitation techniques or ion exchange.

Further, Patent Literature 4 discloses a method for recovering copper, nickel, and cobalt from an ammonia solution using hydrogen.

This method provides a method of efficiently leaching copper, nickel, and cobalt from a deep-sea oxide mineral using hydrogen. Specifically, activated hydrogen is provided to deep-sea oxide mineral particles dispersed in an ammonia-ammonium salt solution in the presence of a hydrogen-reducible reaction medium; the reaction medium is reduced by the activated hydrogen; and the above deep-sea oxide mineral is reduced by the reaction medium to thereby leach copper, nickel, and cobalt in the mineral as ammine complex ions.

However, this method requires a catalyst in which noble metal such as platinum is carried on the surface of an inert solid in order to accelerate the reduction reaction, and the method cannot be said to be advantageous considering the cost required for the amount of the catalyst and the replenishment for the natural decrease of the catalyst required when performed on an industrial scale.

W. Kunda et al. in "The reduction of cobalt from its aqueous ammine ammonium sulphate system using hydrogen under pressure" Hydrometallurgy vol. 4, no. 4, 1 January 1979 p347-365, discloses reducing cobalt ammine sulphate solutions by gaseous hydrogen at elevated temperatures and pressure to metallic cobalt powder via a catalytic reaction. The cobalt is produced in a cycle comprising a nucleation reduction with a suitable catalyst and densification reductions in which the produced cobalt powder is used as a catalyst.

### Citation List

### Patent Literature

Patent Literature 1: Japanese Translation of PCT International Application Publication No. JP-T-08-503999
Patent Literature 2: Japanese Patent Laid-Open No. 2010-242143
Patent Literature 3: Japanese Translation of PCT International Application Publication No. JP-T-2006-516679
Patent Literature 4: Japanese Patent Laid-Open No. 06-116662

### Summary of Invention

### Technical Problem

In such a situation, the present invention intends to provide a production method for producing coarse particles of high purity cobalt powder from a cobalt ammine sulfate complex solution using fine cobalt powder and using industrially inexpensive hydrogen gas.

### Solution to Problem

According to an aspect of the present invention, to solve such a problem, there is a method for producing cobalt powder from a cobalt ammine sulfate complex solution derived from a cobalt-containing material, as defined in claim 1. Preferred and/or optional features are set out in the dependent claims.

In the seed crystal addition step (1), a dispersant may further be added to the mixed slurry when the seed crystals are added to the cobalt ammine sulfate complex solution to form a mixed slurry.

In the seed crystal addition step (1), the amount of the seed crystals added may be 1 to 200% by weight with respect to the weight of cobalt in the cobalt ammine sulfate complex solution.

The cobalt ammine sulfate complex solution may be obtained by: a leaching step of dissolving the cobalt-containing material containing nickel and impurities; a nickel separation step of adjusting a pH of the leachate containing cobalt, nickel, and impurities and obtained in the leaching step and then separating the leachate into a crude cobalt sulfate solution and a nickel recovery solution by solvent extraction; a solution purification step of removing the impurities from the crude cobalt sulfate solution obtained in the nickel separation step by any or a combination of solvent extraction, a sulfurization method, and a neutralization method to obtain a cobalt sulfate solution; and a complexing step of subjecting the cobalt sulfate solution to complexing treatment with ammonia.

The cobalt-containing material may be at least one of cobalt and nickel mixed sulfide, crude cobalt sulfate, cobalt oxide, cobalt hydroxide, cobalt carbonate, and metallic cobalt powder.

A solvent used in the solvent extraction of the nickel separation step and the solution purification step may be 2-ethylhexylphosphonic acid mono-2-ethylhexyl ester or di-(2,4,4-trimethylpentyl)phosphinic acid.

In the seed crystal addition step (1), the concentration of ammonium sulfate in the cobalt ammine sulfate complex solution may be 100 to 500 g/l, and the ammonium concentration may be 1.9 or more by mole with respect to the concentration of cobalt in the complex solution.

Regarding the hydrogen reduction in the hydrogen reduction reactions in the reduction step (2) and the growth step (3), hydrogen reduction may be performed by maintaining the temperature of 120 to 250°C and the pressure of 1.0 to 4.0 MPa.

The dispersant may include one or more of an acrylate and a sulfonate.

The method may further include: a cobalt powder briquetting step of processing the high purity cobalt powder obtained in the growth step (3) into cobalt briquettes in a block form using a briquetting machine; and a briquette sintering step of sintering the resulting cobalt briquettes in the block form under the condition of maintaining the temperature of 500 to 1200°C in a hydrogen atmosphere to form cobalt briquettes as a sintered compact.

The method may further include an ammonium sulfate recovery step of concentrating a solution after reaction obtained by separating cobalt powder as a solid phase component by the solid-liquid separation in the recovery steps after the reduction step (2) and the growth step (3), to precipitate ammonium sulfate to recover ammonium sulfate crystals.

The method may further include an ammonia recovery step of adding an alkali to a solution after reaction obtained by separating cobalt powder as the solid phase component by the solid-liquid separation in the recovery steps after the reduction step (2) and the growth step (3), and heating the resulting mixture to volatilize and recover ammonia gas.

The ammonia recovered in the ammonia recovery step may be recycled in the production processes in the method, and used as an alkali for pH adjustment in the nickel separation step, as an alkali for neutralization when the neutralization method is used in the solution purification step, and as an alkali used in the complexing step.

The seed crystals of the cobalt powder in the seed crystal addition step (1) may be cobalt powder formed by adding a reducing agent to the cobalt sulfate solution obtained in the solution purification step.

The seed crystals of the cobalt powder in the seed crystal addition step (1) may be cobalt powder formed by hydrogen reduction reaction in which an insoluble solid is added to the cobalt ammine sulfate complex solution obtained in the complexing step and hydrogen gas is blown into the resulting mixture at high temperature and high pressure.

Cobalt briquettes may be obtained using the methods of the above mentioned aspect.

### Advantageous Effect of Invention

In a method for producing cobalt powder using hydrogen gas from a cobalt ammine sulfate complex

In another non-claimed aspect and not according to the invention there is provided cobalt briquettes obtained using the methods of the above mentioned aspects.

### Advantageous Effect of Invention

In a method for producing cobalt powder using hydrogen gas from a cobalt ammine sulfate complex solution, high purity cobalt powder and cobalt briquettes can be efficiently obtained by employing the present invention, and an industrially remarkable effect can be thus achieved.

### Brief Description of Drawings

[Figure 1] Figure 1 is a production flow chart of cobalt powder according to the present invention.
[Figure 2] Figure 2 is a view showing the change in the average particle size by the number of times of the growth step in Example 1.

### Description of Embodiments

According to the present invention, in the production method for obtaining cobalt powder from a cobalt ammine sulfate complex solution, it is characterized in that high purity cobalt powder containing a smaller amount of impurities is produced from the cobalt ammine sulfate complex solution by subjecting a process solution of the hydrometallurgical process to the steps (1) to (4) in sequence discussed below.

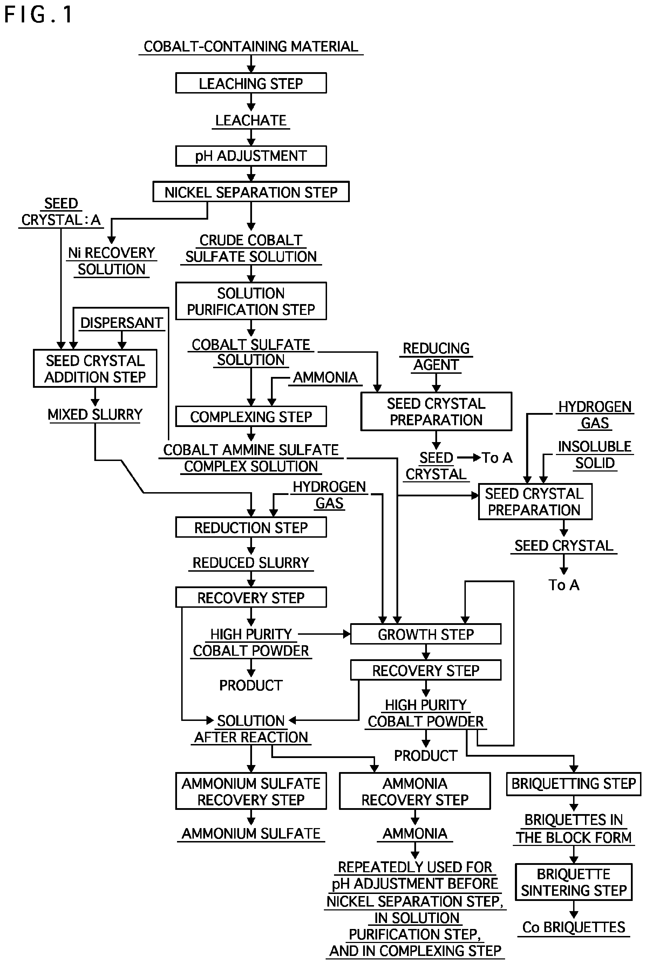

Hereinafter, the method for producing high purity cobalt powder according to the present invention will be described with reference to the production flow chart of high purity cobalt powder according to the present invention shown in Figure 1.

### [Leaching Step]

First, the leaching step is a step of dissolving a cobalt-containing material, serving as a starting material, such as an industrial intermediate including one or a mixture selected from cobalt and nickel mixed sulfide, crude cobalt sulfate, cobalt oxide, cobalt hydroxide, cobalt carbonate, and cobalt powder, with sulfuric acid to leach cobalt to produce a leachate, and can be performed by a known method disclosed in Japanese Patent Laid-Open No. 2005-350766 and the like.

### [Nickel Separation Step]

Next, the pH of the leachate is adjusted, and the resulting leachate is subjected to the nickel separation step.

This nickel separation step is a step of bringing an organic phase into contact with a pH-adjusted leachate (aqueous phase), which is obtained in the leaching step and then subjected to pH adjustment, to exchange the components in each phase, thereby increasing the concentration of some components in the aqueous phase and reducing the concentration of other different components.

In the present invention, "2-ethylhexylphosphonic acid mono-2-ethylhexyl ester" or "di-(2,4,4-trimethylpentyl)phosphinic acid" is used as the organic phase to selectively extract cobalt in the leachate of the aqueous phase, and a crude cobalt sulfate solution is obtained by stripping using sulfuric acid.

Further, ammonia produced in an ammonia recovery step as described below may be used as the aqueous ammonia used for pH adjustment during this step.

### [Solution Purification Step]

The solution purification step is a step of reducing impurities contained in the crude cobalt sulfate solution obtained in the nickel separation step, and the step is performed by solvent extraction of selectively extracting impurity elements in the crude cobalt sulfate solution using "2-ethylhexylphosphonic acid mono-2-ethylhexyl ester" or "di-(2,4,4-trimethylpentyl)phosphinic acid" as the organic phase to obtain a high purity cobalt sulfate solution, a sulfurization method of adding a sulfurizing agent such as hydrogen sulfide gas, sodium sulfide, potassium sulfide, and sodium hydrogen sulfide to selectively precipitate and remove impurities, and a neutralization method of adding an alkali such as sodium hydroxide, calcium hydroxide, sodium carbonate, calcium carbonate, and magnesium hydroxide to selectively precipitate and remove impurities.

### [Complexing Step]

The complexing step is a step of adding ammonia in the form of ammonia gas or aqueous ammonia to the high purity cobalt sulfate solution obtained in the solution purification step to subject the solution to complexing treatment to produce a cobalt ammine sulfate complex which is an ammine complex of cobalt, thus forming a cobalt ammine sulfate complex solution thereof.

The ammonia is added so that the ammonium concentration at this time may be 1.9 or more by mole based on the concentration of cobalt in the solution. If the concentration of the ammonia to be added is less than 1.9, cobalt will not form an ammine complex, but a precipitate of cobalt hydroxide will be produced.

Further, in order to adjust the concentration of ammonium sulfate, ammonium sulfate may be added in this step.

The concentration of ammonium sulfate at this time is preferably 100 to 500 g/L. If the concentration is 500 g/L or more, solubility will be exceeded to precipitate crystals to prevent operation. Further, it is difficult to achieve a concentration of less than 100 g/L in terms of the metal balance in the process.

Also, ammonia produced in the ammonia recovery step as described below may be used as the ammonia gas or aqueous ammonia used in this step.

### [Steps of Producing Cobalt Powder from Cobalt Ammine Sulfate Complex Solution]

The steps of producing cobalt powder from the high purity cobalt ammine sulfate complex solution shown by the treatment steps in Figure 1 will be described below.

### (1) Seed Crystal Addition Step

This is the step of adding cobalt powder as seed crystals in the form of a cobalt powder slurry to the cobalt ammine sulfate complex solution to form a mixed slurry containing the seed crystals.

The weight of the seed crystals added at this time is preferably 1 to 200% by weight based on the weight of cobalt in the cobalt ammine sulfate complex solution. If the weight of the seed crystals is less than 1%, the reaction efficiency during the reduction in the next step will be significantly reduced, which is not preferred. Further, if the weight of the seed crystals exceeds 200%, the amount of the seed crystals used will be excessively large, which generates a problem in the handling of the seed crystals and is not economical because the production of the seed crystals requires much cost. Thus, such an amount of seed crystals used is not preferred.

The cobalt powder can be produced by mixing a reducing agent with the high purity cobalt sulfate solution obtained in the solvent extraction step.

The reducing agents which can be used here include, but are not limited to, hydrazine and sodium sulfite which are widely used industrially.

At this time, an alkali may also be mixed, and pH is preferably adjusted to 7 to 12 using sodium hydroxide.

Further, a reaction temperature is preferably 25 to 80°C. If the temperature is less than 25°C, reaction time will increase, and the industrial application of the long reaction time will not be realistic. On the other hand, if the temperature is 80°C or more, the material of a reaction vessel will be limited to increase the cost of equipment. Further, the particle size of the cobalt powder produced can be reduced by adding a small amount of surfactant at this time.

As an another method of producing seed crystals, the seed crystals can be produced by blowing hydrogen gas into a cobalt ammine sulfate complex solution under the conditions of the reduction step to be described below. At this time, recovery efficiency can be improved by adding an insoluble solid, such as iron powder, alumina balls, and zirconia balls, and a dispersant to the cobalt ammine sulfate complex solution.

The dispersant may be added to the mixed slurry containing seed crystals at the same time. Since the seed crystals are dispersed by adding the dispersant, the reaction efficiency in the reduction step as the next step can be effectively improved.

The dispersants used here include, but are not limited to, those having one or more of an acrylate and a sulfonate, and polyacrylates and lignin sulfonates are preferred as those which can be industrially inexpensively obtained.

### (2) Reduction Step

Hydrogen gas is blown into the mixed slurry obtained in the seed crystal addition step (1) and cobalt is precipitated from the solution onto the seed crystals by the hydrogen reduction reaction at high pressure.

At this time, reaction temperature is preferably 120 to 250°C. If the temperature is less than 120°C, reduction efficiency will be reduced, and even if the temperature exceeds 250°C, the reaction will not be accelerated, and the loss of thermal energy and the like will increase, which is not preferred.

Further, the pressure during the reaction is preferably 1.0 to 4.0 MPa. If the pressure is less than 1.0 MPa, reaction efficiency will be reduced, and even if the pressure exceeds 4.0 MPa, there will be no influence on the reaction, and the loss of hydrogen gas will increase.

In the liquid of the mixed slurry, magnesium ions, sodium ions, sulfate ions, and ammonium ions are mainly present as impurities, but since these impurities all remain in the solution, high purity cobalt powder can be produced.

### (3) Growth Step

To the slurry obtained by adding the cobalt ammine sulfate complex solution obtained in the complexing step described above to the high purity cobalt powder, is fed hydrogen gas at high pressure according to the same method as the reduction step (2), to reduce and precipitate the cobalt component in the slurry onto the high purity cobalt powder by the hydrogen reduction reaction, thereby to form a slurry containing grown cobalt particles.

Further, high purity cobalt powder having a larger particle size can be produced by repeating this growth step a plurality of times. Further, the high purity cobalt powder having a larger particle size is separated into high purity cobalt powder and a solution after reaction by a recovery step. The resulting high purity cobalt powder may be finished into the shape of briquettes, which are coarser, more difficult to oxidize, and more easily handled, through the briquetting and briquette firing steps described below.

Furthermore, the ammonium sulfate contained in the solution after reaction obtained in the recovery step can be recovered in an ammonium sulfate recovery step, or ammonia can also be recovered in an ammonia recovery step.

### (4) Recovery Steps after Reduction Step and Growth Step

The reduced slurry formed in the reduction step (2) or the slurry containing the grown cobalt particles formed in the growing step (3) is subjected to solid-liquid separation to recover high purity cobalt powder and a solution after reaction.

### [Cobalt Powder Briquetting Step]

The high purity cobalt powder produced by the present invention is dried and then processed for shaping with a briquetting machine or the like to obtain cobalt briquettes in a block form as a product form.

Further, in order to improve the processability to form the briquettes, a material that does not impair the product quality such as water may be added as a binder to the cobalt powder depending on conditions.

### [Briquette Sintering Step]

The cobalt briquettes prepared in the briquetting step is subjected to roasting and sintering in a hydrogen atmosphere to make a briquette sintered compact. This treatment is performed for increasing the strength and removing ammonia, sulfur, and carbon components remaining in a very small amount, and the roasting and a sintering temperature of the treatment is preferably 500 to 1200°C. If the temperature is less than 500°C, the sintering will be insufficient, and even if the temperature exceeds 1200°C, the efficiency will hardly change but the loss of energy will increase.

### [Ammonium Sulfate Recovery Step]

Ammonium sulfate and ammonia are contained in the solution after reaction produced in the recovery step (4).

Thus, ammonium sulfate can be recovered as ammonium sulfate crystals by heating and concentrating the solution after reaction to crystallize ammonium sulfate.

### [Ammonia Recovery Step]

On the other hand, an alkali is added to the solution after reaction to adjust the pH to a range of 10 to 13, and then the resulting solution can be heated to volatilize ammonia as a gas to recover the ammonia.

The alkali used here preferably includes, but is not limited to, sodium hydroxide and slaked lime, because they are industrially inexpensive.

Further, the recovered ammonia gas is brought into contact with water to produce aqueous ammonia, and the resulting aqueous ammonia may also be repeatedly used for the pH adjustment before the nickel separation step to which ammonia is added, in the solution purification step in the case of using the solvent extraction, and in the complexing step.

### Examples

The present invention will be described below in more detail using Examples.

### Example 1

### (1) Seed Crystal Addition Step

To a solution containing cobalt sulfate in which 75 g of cobalt was contained and 330 g of ammonium sulfate, was added 191 ml of 25% aqueous ammonia to prepare a solution, which was adjusted so that the total volume of the solution was 1000 ml. To the resulting solution, were added 75 g (100% based on the weight of cobalt) of cobalt powder having an average particle size of 10 µm as seed crystals and 12.5 g of sodium polyacrylate (40% solution) as a dispersant to prepare a mixed slurry.

### (2) Reduction Step

The mixed slurry prepared in the seed crystal addition step was charged to an autoclave and heated to 185°C with stirring, and then hydrogen gas was blown and fed into the mixed slurry so that the pressure in the autoclave became 3.5 MPa to subject the mixed slurry to cobalt powder production treatment which is reduction treatment.

After the lapse of one hour from the start of feeding hydrogen gas, the feed of hydrogen gas was stopped, and the autoclave was cooled.

### (3) Recovery Step after Reduction Step

A reduced slurry obtained after cooling was subjected to solid-liquid separation by filtration, and the slurry was separated to recover high purity cobalt powder having a small size and a solution after reaction. The cobalt powder recovered at this time was 141 g.

### (4) Growth Step

Next, to a solution containing cobalt sulfate in which 75 g of cobalt is contained and 330 g of an ammonium sulfate concentration, was added 191 ml of 25% aqueous ammonia to prepare a solution, which was adjusted so that the total volume of the solution was 1000 ml.

To the resulting solution, was added the entire amount of the high purity cobalt powder having the small size obtained in the above recovery step after the reduction step as seed crystals to prepare a mixed slurry.

The mixed slurry was charged to an autoclave and heated to 185°C with stirring, and hydrogen gas was blown and fed into the slurry so that the pressure in the autoclave became 3.5 MPa.

After the lapse of one hour from the start of feeding hydrogen gas, the feed of hydrogen gas was stopped, and the autoclave was cooled. A slurry obtained after cooling was subjected to solid-liquid separation by filtration to recover high purity cobalt powder having grown particles.

A portion of the cobalt powder was divided to measure the particle size using a known method, and the remainder was added as the cobalt powder having a small size described in the above growth step to repeat the growth step in which the cobalt powder having a small size is subjected to the reduction with hydrogen gas in the autoclave.

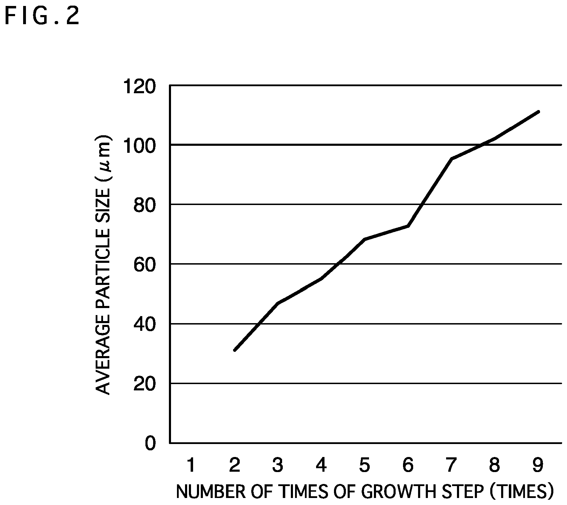

Figure 2 shows the average particle size (µm) of cobalt powder versus the number of times of the growth step (which is the number of times of repetition) (times). It was verified that the cobalt powder grew and coarsened for every repetition.

The number of times of repetition may be optionally determined taking the productivity and the economical efficiency, such as required size of powder and required facility size and labor, into consideration.

### Example 2

To 1000 ml of a cobalt ammine sulfate complex solution shown in Table 1, was added 75 g of cobalt powder having an average particle size of 10 µm as seed crystals. Then, the resulting mixture was charged to an autoclave and then heated to 185°C with stirring, and hydrogen gas was blown and fed into the mixture so that the pressure in the autoclave became 3.5 MPa.

After the lapse of one hour from the start of feeding hydrogen gas, the feed of hydrogen gas was stopped, and the autoclave was cooled. A slurry obtained after cooling was subjected to solid-liquid separation by filtration to recover cobalt powder, which was washed with pure water and then analyzed for the impurity content in the cobalt powder.

The results are shown in Table 1.

The mixing of Mg, Na and Ca into the cobalt powder was not observed, and high purity cobalt powder was able to be produced.

**[Table 1]**

| | Co | Mg | Na | Ca |
|---|---|---|---|---|
| Cobalt ammine sulfate solution | 31 | 0.9 | 31 | 0.2 |
| [g/L] | | | | |
| High purity cobalt powder | - | <0.005 | <0.005 | <0.005 |
| [wt%] | | | | |

### (Comparative Example 1)

To a solution containing cobalt sulfate in which 75 g of cobalt is contained and 330 g of an ammonium sulfate concentration, was added 191 ml of 25% aqueous ammonia to prepare a solution, which was adjusted so that the total volume of the solution was 1000 ml.

The slurry was charged to an autoclave without adding seed crystals, and then hydrogen gas was fed until the pressure in the autoclave became 3.5 MPa, with stirring, followed by heating to 185°C followed by holding the temperature for one hour. The amount of cobalt powder which was able to be recovered from the inside of the autoclave after cooling was only 1 g.

As having been described above, the use of the present invention allows us to efficiently obtain high purity cobalt powder and cobalt briquettes.

## Claims

1. A method of producing cobalt powder from a cobalt ammine sulfate complex solution derived from a cobalt-containing material, comprising:
(1) a seed crystal addition step of adding cobalt powder as seed crystals to the cobalt ammine sulfate complex solution to form a mixed slurry;
(2) a reduction step of blowing hydrogen gas into the mixed slurry obtained in the seed crystal addition step to precipitate a cobalt component in the mixed slurry onto the seed crystals by hydrogen reduction reaction to form cobalt powder, and thereby to form a reduced slurry containing the cobalt powder;
(2a) a recovery step after the reduction step (2) of subjecting the reduced slurry containing the cobalt powder obtained in the reduction step (2) to solid-liquid separation to separate and recover the cobalt powder as a solid phase component;
(3) a growth step of adding, to the cobalt ammine sulfate complex solution, the cobalt powder obtained by solid-liquid separation of the reduced slurry formed in the reduction step (2) to form a slurry, blowing hydrogen gas into the resulting slurry, and reducing, precipitating, and growing a cobalt component in the slurry on a surface of the cobalt powder by hydrogen reduction reaction to form a grown cobalt powder, and thereby to form a slurry containing the grown cobalt powder; and
(3a) another recovery step after the growth step (3) of subjecting the slurry containing the cobalt powder obtained in the growth step (3) to solid-liquid separation to separate and recover the cobalt powder as a solid phase component.

2. The method of producing cobalt powder according to claim 1, wherein, in the seed crystal addition step (1), a dispersant is further added to the mixed slurry when the seed crystals are added to the cobalt ammine sulfate complex solution to form the mixed slurry.

3. The method of producing cobalt powder according to claim 1 or 2, wherein, in the seed crystal addition step (1), an amount of the seed crystals added is 1 to 200% by weight with respect to the weight of cobalt in the cobalt ammine sulfate complex solution.

4. The method of producing cobalt powder according to any one of claims 1 to 3, wherein the cobalt ammine sulfate complex solution is obtained by:
a leaching step of dissolving the cobalt-containing material containing nickel and impurities;
a nickel separation step of adjusting a pH of the leachate containing cobalt, nickel, and impurities and obtained in the leaching step and then separating the leachate into a crude cobalt sulfate solution and a nickel recovery solution by solvent extraction;
a solution purification step of removing the impurities from the crude cobalt sulfate solution obtained in the nickel separation step by any one or a combination of solvent extraction, a sulfurization method, and a neutralization method to obtain a cobalt sulfate solution; and
a complexing step of subjecting the cobalt sulfate solution to complexing treatment with ammonia.

5. The method of producing cobalt powder according to claim 4, wherein the cobalt-containing material is at least one of cobalt and nickel mixed sulfide, crude cobalt sulfate, cobalt oxide, cobalt hydroxide, cobalt carbonate, and metallic cobalt powder.

6. The method of producing cobalt powder according to claim 4 or 5, wherein 2-ethylhexylphosphonic acid mono-2-ethylhexyl ester or di-(2,4,4-trimethylpentyl)phosphinic acid is used as a solvent in the solvent extraction of the solution purification step and the nickel separation step.

7. The method of producing cobalt powder according to any one of claims 1 to 3, wherein, in the seed crystal addition step (1), the cobalt ammine sulfate complex solution has an ammonium sulfate concentration of 100 to 500 g/l, and an ammonium concentration of 1.9 or more by mole with respect to a cobalt concentration in the cobalt ammine sulfate complex solution.

8. The method of producing cobalt powder according to claim 1, wherein, regarding the hydrogen reduction reaction in the reduction step (2) and the growth step (3), hydrogen reduction is performed by maintaining a temperature of 120 to 250°C and a pressure of 1.0 to 4.0 MPa.

9. The method of producing cobalt powder according to claim 2, wherein the dispersant comprises one or more of an acrylate and a sulfonate.

10. The method of producing cobalt powder according to claim 1, further comprising:
a cobalt powder briquetting step of processing the cobalt powder having high purity and obtained in the growth step (3) into cobalt briquettes in a block form using a briquetting machine; and
a briquette sintering step of sintering the resulting cobalt briquettes in the block form under a condition of maintaining a temperature of 500 to 1200°C in a hydrogen atmosphere to form cobalt briquettes as a sintered compact.

11. The method of producing cobalt powder according to claim 1, further comprising an ammonium sulfate recovery step of concentrating a solution after reaction obtained by separating the cobalt powder as the solid phase component by the solid-liquid separation in the recovery step (2a) after the reduction step (2) and the recovery step (3a) after the growth step (3), to precipitate ammonium sulfate to recover ammonium sulfate crystals.

12. The method of producing cobalt powder according to claim 1, further comprising an ammonia recovery step of adding an alkali to a solution after reaction obtained by separating cobalt powder as the solid phase component by the solid-liquid separation in the recovery step (2a) after the reduction step (2) and the recovery step (3a) after the growth step (3), and heating the resulting mixture to volatilize and recover ammonia gas.

13. The method of producing cobalt powder according to claim 1, wherein the ammonia recovered in the ammonia recovery step is recycled in production processes in the method of producing the cobalt powder according to claim 1, and used as an alkali for pH adjustment in the nickel separation step according to claim 4, as an alkali for neutralization when the neutralization method is used in the solution purification step according to claim 4, and as an alkali used in the complexing step according to claim 4.

14. The method of producing cobalt powder according to claim 1, wherein the seed crystals of the cobalt powder in the seed crystal addition step (1) is cobalt powder formed by adding a reducing agent to the cobalt sulfate solution obtained in the solution purification step according to claim 4.

15. The method of producing cobalt powder according to claim 1, wherein the seed crystals of the cobalt powder in the seed crystal addition step (1) is cobalt powder formed by hydrogen reduction reaction in which an insoluble solid is added to the cobalt ammine sulfate complex solution obtained in the complexing step according to claim 4 and hydrogen gas is blown into the resulting mixture at high temperature and high pressure.

## Patentansprüche

1. Verfahren zur Herstellung von Cobaltpulver aus einer Cobaltamminsulfatkomplexlösung, die aus einem cobalthaltigen Material abgeleitet ist, umfassend:
(1) einen Keimkristallzugabeschritt des Zugebens von Cobaltpulver als Keimkristalle zu der Cobaltamminsulfatkomplexlösung, um eine gemischte Aufschlämmung zu bilden;
(2) einen Reduktionsschritt des Blasens von Wasserstoffgas in die bei dem Keimkristallzugabeschritt erhaltene gemischte Aufschlämmung, um durch Wasserstoffreduktionsreaktion eine Cobaltkomponente in der gemischten Aufschlämmung auf die Keimkristalle zu präzipitieren, um Cobaltpulver zu bilden und dadurch eine reduzierte Aufschlämmung, die das Cobaltpulver enthält, zu bilden;
(2a) einen Gewinnungsschritt nach dem Reduktionsschritt (2) des Unterwerfens der bei dem Reduktionsschritt (2) erhaltenen reduzierten Aufschlämmung, die das Cobaltpulver enthält, einer Fest-Flüssig-Trennung, um das Cobaltpulver als eine Komponente mit fester Phase abzutrennen und zu gewinnen;
(3) einen Wachstumsschritt des Zugebens des durch Fest-Flüssig-Trennung der bei dem Reduktionsschritt (2) erhaltenen reduzierten Aufschlämmung erhaltenen Cobaltpulvers zu der Cobaltamminsulfatkomplexlösung, um eine Aufschlämmung zu bilden, des Blasens von Wasserstoffgas in die erhaltene Aufschlämmung und des Reduzierens, Präzipitierens und Aufwachsens einer Cobaltkomponente in der Aufschlämmung auf eine Oberfläche des Cobaltpulvers durch Wasserstoffreduktionsreaktion, um ein gewachsenes Cobaltpulver zu bilden und dadurch eine Aufschlämmung zu bilden, die das gewachsene Cobaltpulver enthält; und
(3a) einen weiteren Gewinnungsschritt nach dem Wachstumsschritt (3) des Unterwerfens der bei dem Wachstumsschritt (3) erhaltenen Aufschlämmung, die das Cobaltpulver enthält, einer Fest-Flüssig-Trennung, um das Cobaltpulver als eine Komponente mit fester Phase abzutrennen und zu gewinnen.

2. Verfahren zur Herstellung von Cobaltpulver gemäß Anspruch 1, wobei bei dem Keimkristallzugabeschritt (1) ferner ein Dispergiermittel zu der gemischten Aufschlämmung zugegeben wird, wenn die Keimkristalle zu der Cobaltamminsulfatkomplexlösung zugegeben werden, um die gemischte Aufschlämmung zu bilden.

3. Verfahren zur Herstellung von Cobaltpulver gemäß Anspruch 1 oder 2, wobei bei dem Keimkristallzugabeschritt (1) eine Menge an zugegebenen Keimkristallen 1 bis 200 Gew.-% bezogen auf das Gewicht von Cobalt in der Cobaltamminsulfatkomplexlösung beträgt.

4. Verfahren zur Herstellung von Cobaltpulver gemäß einem der Ansprüche 1 bis 3, wobei die Cobaltamminsulfatkomplexlösung erhalten wird durch:
einen Laugungsschritt des Lösens des cobalthaltigen Materials, das Nickel und Verunreinigungen enthält;
einen Nickelabtrennschritt des Einstellens eines pH-Werts der bei dem Laugungsschritt erhaltenen Laugungslösung, die Cobalt, Nickel und Verunreinigungen enthält, und anschließend Auftrennen der Laugungslösung in eine rohe Cobaltsulfatlösung und eine Nickelgewinnungslösung durch Lösungsmittelextraktion;
einen Lösungsreinigungsschritt des Entfernens der Verunreinigungen aus der bei dem Nickelabtrennschritt erhaltenen rohen Cobaltsulfatlösung durch eines oder eine Kombination von Lösungsmittelextraktion, einem Sulfurierungsverfahren und einem Neutralisationsverfahren, um eine Cobaltsulfatlösung zu erhalten; und
einen Komplexbildungsschritt des Unterwerfens der Cobaltsulfatlösung einer Komplexbildungsbehandlung mit Ammoniak.

5. Verfahren zur Herstellung von Cobaltpulver gemäß Anspruch 4, wobei das cobalthaltige Material wenigstens eines von Cobalt-Nickel-Mischsulfid, rohem Cobaltsulfat, Cobaltoxid, Cobalthydroxid, Cobaltcarbonat und metallischem Cobaltpulver ist.

6. Verfahren zur Herstellung von Cobaltpulver gemäß Anspruch 4 oder 5, wobei 2-Ethylhexylphosphonsäuremono-2-ethylhexylester oder Di(2,4,4-trimethylpentyl)phosphinsäure als Lösungsmittel bei der Lösungsmittelextraktion des Lösungsreinigungsschritts und des Nickelabtrennschritts verwendet wird.

7. Verfahren zur Herstellung von Cobaltpulver gemäß einem der Ansprüche 1 bis 3, wobei bei dem Keimkristallzugabeschritt (1) die Cobaltamminsulfatkomplexlösung eine Ammoniumsulfatkonzentration von 100 bis 500 g/l und eine Ammoniumkonzentration von 1,9 oder mehr nach mol bezogen auf eine Cobaltkonzentration in der Cobaltamminsulfatkomplexlösung aufweist.

8. Verfahren zur Herstellung von Cobaltpulver gemäß Anspruch 1, wobei bei der Wasserstoffreduktionsreaktion bei dem Reduktionsschritt (2) und dem Wachstumsschritt (3) die Wasserstoffreduktion durch Halten einer Temperatur von 120 bis 250 °C und eines Drucks von 1,0 bis 4,0 MPa durchgeführt wird.

9. Verfahren zur Herstellung von Cobaltpulver gemäß Anspruch 2, wobei das Dispergiermittel eines oder mehrere von einem Acrylat und einem Sulfonat umfasst.

10. Verfahren zur Herstellung von Cobaltpulver gemäß Anspruch 1, ferner umfassend:
einen Cobaltpulver-Brikettierschritt der Verarbeitung des bei dem Wachstumsschritt (3) erhaltenen Cobaltpulvers mit hoher Reinheit zu Cobaltbriketts in einer Blockform unter Verwendung einer Brikettiermaschine; und
einen Brikettsinterschritt des Sinterns der erhaltenen Cobaltbriketts in der Blockform unter einer Bedingung des Haltens einer Temperatur von 500 bis 1200 °C in einer Wasserstoffatmosphäre, um Cobaltbriketts als gesinterten Kompaktkörper zu bilden.

11. Verfahren zur Herstellung von Cobaltpulver gemäß Anspruch 1, ferner umfassend einen Ammoniumsulfatgewinnungsschritt des Konzentrierens einer Nachreaktionslösung, die durch Abtrennen des Cobaltpulvers als die Komponente mit fester Phase durch die Fest-Flüssig-Trennung bei dem Gewinnungsschritt (2a) nach dem Reduktionsschritt (2) und dem Gewinnungsschritt (3a) nach dem Wachstumsschritt (3) erhalten worden ist, um Ammoniumsulfat zu präzipitieren, um Ammoniumsulfatkristalle zu gewinnen.

12. Verfahren zur Herstellung von Cobaltpulver gemäß Anspruch 1, ferner umfassend einen Ammoniakgewinnungsschritt des Zugebens eines Alkalis zu einer Nachreaktionslösung, die durch Abtrennen von Cobaltpulver als die Komponente mit fester Phase durch die Fest-Flüssig-Trennung bei dem Gewinnungsschritt (2a) nach dem Reduktionsschritt (2) und dem Gewinnungsschritt (3a) nach dem Wachstumsschritt (3) erhalten worden ist, und Erhitzen des erhaltenen Gemischs, um Ammoniakgas zu volatilisieren und zu gewinnen.

13. Verfahren zur Herstellung von Cobaltpulver gemäß Anspruch 1, wobei der bei dem Ammoniakgewinnungsschritt gewonnene Ammoniak zu Produktionsverfahren bei dem Verfahren zur Herstellung von Cobaltpulver gemäß Anspruch 1 rückgeführt wird und als Alkali zum Einstellen des pH-Werts bei dem Nickelabtrennschritt gemäß Anspruch 4, als Alkali zur Neutralisation bei der Verwendung des Neutralisationsverfahrens bei dem Lösungsreinigungsschritt gemäß Anspruch 4 und als Alkali zur Verwendung bei dem Komplexbildungsschritt gemäß Anspruch 4 verwendet wird.

14. Verfahren zur Herstellung von Cobaltpulver gemäß Anspruch 1, wobei die Keimkristalle des Cobaltpulvers bei dem Keimkristallzugabeschritt (1) Cobaltpulver sind, das durch Zugeben eines Reduktionsmittels zu der bei dem Lösungsreinigungsschritt gemäß Anspruch 4 erhaltenen Cobaltsulfatlösung gebildet ist.

15. Verfahren zur Herstellung von Cobaltpulver gemäß Anspruch 1, wobei die Keimkristalle des Cobaltpulvers bei dem Keimkristallzugabeschritt (1) Cobaltpulver sind, das durch Wasserstoffreduktionsreaktion erhalten ist, bei der ein unlöslicher Feststoff zu der bei dem Komplexbildungsschritt gemäß Anspruch 4 erhaltenen Cobaltamminsulfatkomplexlösung zugegeben wird und Wasserstoffgas bei hoher Temperatur und hohem Druck in das erhaltene Gemisch geblasen wird.

## Revendications

1. Procédé de production de poudre de cobalt à partir d'une solution de complexe de sulfate amminé de cobalt issue d'un matériau contenant du cobalt, comprenant :
(1) une étape d'addition de germe cristallin consistant en l'ajout de poudre de cobalt en tant que germes cristallins à la solution de complexe de sulfate amminé de cobalt pour former une suspension mixte ;
(2) une étape de réduction consistant en le soufflage d'hydrogène gazeux dans la suspension mixte obtenue dans l'étape d'addition de germe cristallin pour précipiter un composant de cobalt dans la suspension mixte sur les germes cristallins par réaction de réduction à l'hydrogène pour former de la poudre de cobalt, et ainsi pour former une suspension réduite contenant la poudre de cobalt ;
(2a) une étape de récupération après l'étape de réduction (2) consistant en la soumission de la suspension réduite contenant la poudre de cobalt obtenue dans l'étape de réduction (2) à une séparation solide-liquide pour séparer et récupérer la poudre de cobalt en tant qu'un composant en phase solide ;
(3) une étape de croissance consistant en l'ajout, à la solution de complexe de sulfate amminé de cobalt, de la poudre de cobalt obtenue par séparation solide-liquide de la suspension réduite formée dans l'état de réduction (2) pour former une suspension, le soufflage d'hydrogène gazeux dans la suspension résultante, et la réduction, la précipitation, et la croissance d'un composant de cobalt dans la suspension sur une surface de la poudre de cobalt par réaction de réduction à l'hydrogène pour former une poudre de cobalt qui a crû, et ainsi pour former une suspension contenant la poudre de cobalt qui a crû ; et
(3a) une autre étape de récupération après l'étape de croissance (3) consistant en la soumission de la suspension contenant la poudre de cobalt obtenue dans l'étape de croissance (3) à une séparation solide-liquide pour séparer et récupérer la poudre de cobalt en tant qu'un composant en phase solide.

2. Procédé de production de poudre de cobalt selon la revendication 1, où, dans l'étape (1) d'addition de germe cristallin, un dispersant est en outre ajouté à la suspension mixte lorsque les germes cristallins sont ajoutés à la solution de complexe de sulfate amminé de cobalt pour former la suspension mixte.

3. Procédé de production de poudre de cobalt selon la revendication 1 ou 2, où, dans l'étape (1) d'addition de germe cristallin, une quantité de germes cristallins ajoutés est de 1 à 200 % en poids par rapport au poids de cobalt dans la solution de complexe de sulfate amminé de cobalt.

4. Procédé de production de poudre de cobalt selon l'une quelconque des revendications 1 à 3, la solution de complexe de sulfate amminé de cobalt étant obtenue par :
une étape de lixiviation de dissolution du matériau contenant du cobalt contenant du nickel et des impuretés ;
une étape de séparation de nickel consistant en l'ajustement d'un pH du lixiviat contenant du cobalt, du nickel, et des impuretés et obtenu dans l'étape de lixiviation et ensuite séparation du lixiviat en une solution brute de sulfate de cobalt et une solution de récupération de nickel par extraction avec un solvant ;
une étape de purification de solution d'élimination des impuretés de la solution brute de sulfate de cobalt obtenue dans l'étape de séparation de nickel par un quelconque procédé, ou une combinaison, parmi une extraction avec un solvant, un procédé de sulfurisation, et un procédé de neutralisation pour obtenir une solution de sulfate de cobalt ; et
une étape de complexation de soumission de la solution de sulfate de cobalt à un traitement de complexation avec de l'ammoniac.

5. Procédé de production de poudre de cobalt selon la revendication 4, le matériau contenant du cobalt étant au moins un matériau parmi un sulfure mixte de cobalt et de nickel, un sulfate de cobalt brut, un oxyde de cobalt, un hydroxyde de cobalt, un carbonate de cobalt, et de la poudre de cobalt métallique.

6. Procédé de production de poudre de cobalt selon la revendication 4 ou 5, de l'ester de mono-2-éthylhexyle de l'acide 2-éthylhexylphosphonique ou de l'acide di-(2,4,4-triméthylpentyl)phosphinique étant utilisé en tant qu'un solvant dans l'extraction avec un solvant de l'étape de purification de solution et de l'étape de séparation de nickel.

7. Procédé de production de poudre de cobalt selon l'une quelconque des revendications 1 à 3, où, dans l'étape (1) d'addition de germe cristallin, la solution de complexe de sulfate amminé de cobalt possède une concentration en sulfate d'ammonium de 100 à 500 g/l, et une concentration en ammonium de 1,9 ou plus par mole par rapport à une concentration en cobalt dans la solution de sulfate amminé de cobalt.

8. Procédé de production de poudre de cobalt selon la revendication 1, où, en ce qui concerne la réaction de réduction à l'hydrogène dans l'étape de réduction (2) et l'étape de croissance (3), une réduction à l'hydrogène est réalisée en maintenant une température de 120 à 250 °C et une pression de 1,0 à 4,0 MPa.

9. Procédé de production de poudre de cobalt selon la revendication 2, le dispersant comprenant l'un ou plusieurs parmi un acrylate et un sulfonate.

10. Procédé de production de poudre de cobalt selon la revendication 1, comprenant en outre :
une étape de briquetage de poudre de cobalt consistant en le traitement de la poudre de cobalt possédant une pureté élevée et obtenue dans l'étape (3) en des briquettes de cobalt dans une forme de bloc à l'aide d'une machine de briquetage ; et
une étape de frittage de briquettes consistant en le frittage des briquettes de cobalt résultantes dans la forme de bloc dans une condition de maintien d'une température de 500 à 1 200 °C dans une atmosphère d'hydrogène pour former des briquettes de cobalt en tant qu'un compact fritté.

11. Procédé de production de poudre de cobalt selon la revendication 1, comprenant en outre une étape de récupération de sulfate d'ammonium consistant en la concentration d'une solution après réaction obtenue par séparation de la poudre de cobalt en tant que le composant en phase solide par la séparation solide-liquide dans l'étape de récupération (2a) après l'étape de réduction (2) et l'étape de récupération (3a) après l'étape de croissance (3), pour précipiter du sulfate d'ammonium pour récupérer des cristaux de sulfate d'ammonium.

12. Procédé de production de poudre de cobalt selon la revendication 1, comprenant en outre une étape de récupération d'ammoniac consistant en l'ajout d'un alcali à une solution après réaction obtenue par séparation de poudre de cobalt en tant que le composant en phase solide par la séparation solide-liquide dans l'étape de récupération (2a) après l'étape de réduction (2) et l'étape de récupération (3a) après l'étape de croissance (3), et chauffage du mélange résultant pour volatiliser et récupérer du gaz ammoniac.

13. Procédé de production de poudre de cobalt selon la revendication 1, l'ammoniac récupéré dans l'étape de récupération d'ammoniac étant recyclé dans des processus de production dans le procédé de production de la poudre de cobalt selon la revendication 1, et utilisé en tant qu'un alcali pour un ajustement de pH dans l'étape de séparation de nickel selon la revendication 4, en tant qu'un alcali pour une neutralisation lorsque le procédé de neutralisation est utilisé dans l'étape de purification de solution selon la revendication 4, et en tant qu'un alcali utilisé dans l'étape de complexation selon la revendication 4.

14. Procédé de production de poudre de cobalt selon la revendication 1, les germes cristallins de la poudre de cobalt dans l'étape (1) d'addition de germe cristallin étant de la poudre de cobalt formée par ajout d'un agent réducteur à la solution de sulfate de cobalt dans l'étape de purification de solution selon la revendication 4.

15. Procédé de production de poudre de cobalt selon la revendication 1, les germes cristallins de la poudre de cobalt dans l'étape (1) d'addition de germe cristallin étant de la poudre de cobalt formée par réaction de réduction à l'hydrogène dans laquelle un solide insoluble est ajouté à la solution de complexe de sulfate amminé de cobalt obtenue dans l'étape de complexation selon la revendication 4 et de l'hydrogène gazeux est soufflé dans le mélange résultant à température élevée et à pression élevée.
